(19) Europäisches Patentamt
European Patent Office
Office européen des brevets

(11) **EP 1 962 439 B1**

(12) **EUROPEAN PATENT SPECIFICATION**

(45) Date of publication and mention
of the grant of the patent:
**08.04.2015 Bulletin 2015/15**

(51) Int Cl.:
***H04W 72/00*** *(2009.01)*     *H04W 84/04* *(2009.01)*
***H04W 72/12*** *(2009.01)*

(21) Application number: **08151424.2**

(22) Date of filing: **14.02.2008**

(54) **Method and apparatus for joint scheduling to increase frequency efficiency and fairness in a multi-channel distributed antenna system using frequency reuse and common power control**

Verfahren und Vorrichtung zur gemeinsamen Planung zur Erhöhung der Frequenzeffizienz und Unparteilichkeit in einem mehrkanaligen verteilten Antennensystem unter Verwendung von Frequenzwiederverwendung und gemeinsame Leistungssteuerung

Procédé et appareil pour la programmation conjointe pour augmenter l'efficacité et l'impartialité de la fréquence dans un système d'antenne multicanaux distribué réutilisant la fréquence et doté d'un contrôle commun de la puissance

(84) Designated Contracting States:
**DE FR GB**

(30) Priority: **23.02.2007 KR 20070018372**

(43) Date of publication of application:
**27.08.2008 Bulletin 2008/35**

(73) Proprietors:
• **Samsung Electronics Co., Ltd.**
 **Suwon-si, Gyeonggi-do, 443-742 (KR)**
• **Industry-University Cooperation Foundation**
 **Sogang University**
 **Mapo-gu, Seoul (KR)**

(72) Inventors:
• **Lee, Jae-Hoon**
 **c/o Samsung Electronics Co., Ltd.**
 **Suwon-si, Gyeonggi-do (KR)**
• **Hwang, Seong-Taek**
 **c/o Samsung Electronics Co., Ltd.**
 **Suwon-si, Gyeonggi-do (KR)**
• **Sung, Won-Jin**
 **Sogang University**
 **Seoul (KR)**
• **Choe, Jin-Woo**
 **Sogang University**
 **Seoul (KR)**
• **Lee, Byoung-Seok**
 **Sogang University**
 **Seoul (KR)**
• **Shong, In-Hong**
 **Sogang University**
 **Seoul (KR)**

(74) Representative: **Grünecker Patent- und Rechtsanwälte**
 **PartG mbB**
 **Anwaltssozietät**
 **Leopoldstrasse 4**
 **80802 München (DE)**

(56) References cited:
**EP-A1- 1 729 533      EP-A2- 1 650 883**
**WO-A1-2006/034578      US-A1- 2002 077 151**
**US-A1- 2004 095 907      US-A1- 2005 048 914**
**US-A1- 2005 141 593      US-A1- 2006 046 643**
**US-A1- 2006 073 790**

• **TAMEH E K ET AL: "The use of intelligently deployed fixed relays to improve the performance of a UTRA-TDD system", VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 3, 6 October 2003 (2003-10-06), pages 1890-1894, XP010701845, DOI: 10.1109/VETECF. 2003.1285353 ISBN: 978-0-7803-7954-1**

**Description**

The present invention generally relates to a technique for interaction between a scheduler and a power controller for joint scheduling and power control in a wireless communication system. More particularly, the present invention relates to a technique for joint scheduling and power control among a Base Station (BS) and Relay Stations (RSs) in order to increase fairness and transmission efficiency on a downlink in a multi-channel Distributed Antenna System (DAS) using frequency reuse and common power control.

In a conventional cellular system, a scheduler selects packets to be transmitted to Mobile Stations (MSs) according to their priority levels. MSs suffer from different amounts of signal attenuation, frequency selectivity, and interference according to their respective locations at any given time. If the MSs are allocated the same amount of transmit power, they will typically have different Signal-to-Interference and Noise Ratios (SINRs). To make the SINRs of the MSs uniform, a power controller allocates higher power to remote MSs and lower power to nearby MSs.

In a multi-channel DAS using a frequency reuse and common power control protocols, the link between a BS and an RS is established by a dedicated line, such as an optical fiber, and each RS functions like the BS, that is, RSs serve as distributed antennas of the BS. The BS and the RSs have their independent service areas, and frequencies can be reused in the service areas. It may occur that two MSs are located next to the boundary between the service areas, although in the different service areas and sharing the same channel. When a scheduler selects packets for the MSs, the MSs have low SINRs due to interference from the neighboring service areas and thus the transmission of the packets to the MSs is highly probable to result in failure. If higher power is allocated to the MSs to increase their SINRs, the resulting increased mutual interference continues to nullify the effect of the power control. If a subchannel with a low fading gain is allocated to an MS in a multi-channel system, the resulting large signal attenuation leads to much power consumption in order to achieve a target SINR. The increased power interferes with other MSs, thereby decreasing the SINRs of these MSs as well. This interference is a result of power control and channel allocation being performed after scheduling. As scheduling, power control, and channel allocation all take place independently, data transmission to MSs will often fail, or a minimum data rate is not met, thereby causing an outage. Accordingly, there has been a long-felt need in the art to address the aforementioned problems.

WO 2006/034578 A1 refers to a method and system for capacity and coverage enhancement in wireless networks with relays. Each cell has a base station and in-cell relay stations. The base station includes interference avoidance/averaging mechanism, dynamic resource partitioning mechanism or a combination thereof. The interference avoidance/averaging mechanism dynamically creates a FH pattern based on interference information obtained from its serving cell. The base station may include a scheduler for dynamic resource partitioning mechanism for managing scheduling in the cell.

US 2005/0048914 A1 refers to a method and apparatus for relay-facilitated communications. Communications sourced by a remote unit that is already within a reception range of a base site can be further facilitated through allocation of one or more relay resources. Such relay resources serve to effectively increase the quality of service for the facilitated communication. With this technique, increased data rates can be achieved for communications from a relatively low power remote unit.

US 2006/0046643 A1 refers to a wireless communication system, relay station device and base station device that reduce dead zones in which communication with the base station device is not possible and enable expansion of service areas. The base station transmits to the relay station burst packets and MAP messages that include information providing notification of the timing of information transmission and reception. The relay station receives the MAP messages and burst packets. In the form of preamble present bits in MAP messages, the relay station stores information providing notification of the preamble transmission timing to control synchronization of reception by the subscriber stations and transmits the MAP messages to the subscriber stations. The relay station transmits versed packets to which preambles are appended to the subscriber stations.

US 2005/0141593 A1 refers to wireless multi-hop system with macroscopic multiplexing. A method, device, and system in which radio links between relays and users are optimized separately from the links between relays and base stations and in which multiple simultaneous data streams between relays and base stations are created. The system includes transceivers of at least three kinds with two kinds of radio interfaces. The first kind of transceiver, a base station (BS), is connected to the core network with a link of wire line quality. The second kind, a relay station (RS), is connected to the BS with a first radio interface, and to the third kind, the user equipment (UE), with a second radio interface. The first and second radio interfaces can operate, at least in part, using the same frequency bandwidth. The UE can also connect directly to the BS using the second radio interface if the BS is closer than any RS.

US 2004/0095907 A1 refers to a method and apparatus for optimization of wireless multi-point electromagnetic communication networks. Exploiting the substantive reciprocity of internode channel responses through dynamic, adaptive modification of receive and transmit weights, enables locally enabled global optimization of a multipoint, wireless electromagnetic communications network of communication nodes. Each diversity-channel-capable node uses computationally efficient exploitation of pilot tone data and diversity-adaptive signal processing of the weightings and the signal to further convey optimization and channel information which promote local and thereby network-global efficiency. The preferred embodiment performs complex digital signal manipulation that includes a linear combining and linear distribution of the transmit and receive weights, the generation of piloting signals containing origination and destination node information, as well as interference-avoiding pseudorandom delay timing, and both symbol and multitone encoding, to gain the benefit of substantive orthogonality at the physical level without requiring actual substantive orthogonality at the physical level.

EP 1 650 883 A2 refers to a method for transmission scheme selection based on the number of antennas and hence the data rate. An apparatus and method are provided for transmitting and receiving high-speed packet data without path loss in a mobile communication system with a plurality of transmitting and receiving antennas. To support high-speed data for a mobile station (MS), a base station (BS) identifies a correlation between the number of transmitting antennas and the number of receiving antennas using feedback information and determines whether to establish a relay transmission scheme. The BS determines if quality of service for the MS is satisfied when the number of transmitting antennas is grater than the number of receiving antennas according to the established relay transmission scheme. When the quality of service for the MS is not satisfied, the BS transmits the high-speed data through a specific node group adjacent to the MS.

US 2006/0073790 A1 refers to a method and system for weight determination in a spatial multiplexing MIMO system for WCDMA/HSDPA. The method may comprise generating models for a received plurality of spatially multiplexed communication signals for multiple channels from a plurality of transmit antennas. A calculated signal to noise ratio (SNR) of each multiple channel may be maximized based on the generated models. A phase and an amplitude of at least a portion of the received plurality of spatially multiplexed communication signals may be adjusted based on a plurality of amplitude and phase correction weights determined from the maximized SNR.

The publication titled "The Use of Intelligently Deployed Fixed Relays to Improve the Performance of a UTRA-TDD System" by E. K. Tameh, et al., Vehicular Technology Conference 2003, USA 6th to 9th October 2003, pages 1890 to 1894, ISBN: 978-0-7803-7954-1 discusses the use of intelligently deployed fixed relays to improve the performance of a UTRA-TDD number 3G system. The benefits of intelligent relaying in the form of enhanced capacity and/or coverage and used RF emissions relative to a traditional cellular network are quantified. Simulations are carried out in a microcellular environment using propagation data from a site specific model and an optimization algorithm to determine the locations of the base stations and relay nodes in the system. A system level simulation of a UTRA-TDD system is used to quantify the benefits of the relayed over the non-relayed system. Results show significant improvements in capacity, spectrum efficiency and reductions in mean terminal transmit power in the relayed system over conventional cellular BS-only operation. The effects of different code allocation strategies for the relay nodes are also investigated revealing that benefits in relaying will only be realized if code is reused between the base stations and the relay nodes are enabled for if relay nodes are located in their own pool of spreading codes.

EP1729533 A1 refers to a scheduling method in a radio communication system using relay stations and systems therefore. A scheduling method and system is disclosed that divides scheduling between a base station and a mobile station into scheduling between the base station and a relay station and scheduling between the relay station and the mobile station, and performs the divided schedulings. In a radio communication system that transmits a signal of a base station to mobile stations located on a border of a cell by using a relay station, the base station having multiple antennas receives phase information of the respective antennas from the relay station having multiple antennas, compensates for phases of the respective antennas, and transmits data through the phase-compensated antennas. The relay station transmits only channel quality information of the mobile station, which has a high possibility of being selected by the base station among channel quality information of the mobile stations that belong to the relay station, to the base station.

US 2002/0077151 A1 refers to a polymorphic cellular network architecture. A nanoCell base station is disclosed for providing radio connectivity among one or more mobile stations, one or more base transceiver stations or one or more other nanoCell base stations. The nanoCell base station of the present invention has one or more transceivers. One of the transceivers provides a base station function, and one of the transceivers provides a mobile station function. A controller is present for managing the transceivers, and determining the communications connectivity paths between base station and mobile station functions.

The present invention, as described in the exemplary embodiments herein, addresses in part at least some of the problems and/or disadvantages discussed herein above, and provides at least the advantages described herein below. Accordingly, the object of the present invention is to provide a method and apparatus for efficient interaction among scheduling, power controller, and channel allocation in a multi-channel DAS using frequency reuse and common power control, in order to maximize transmission efficiency and decrease the probability of outage, which is a problem particularly encountered when performing independent scheduling, power control, and channel allocation on a downlink in a cellular system that operates in an Adaptive Modulation and Coding (AMC) channel mode.

This object is solved by the subject matter of the independent claims.

Preferred embodiments are defined in the dependent claims.

The above features and advantages of certain exemplary embodiments of the present invention described herein will be more apparent from the following detailed description taken in conjunction with the accompanying drawings, in which:

FIG. 1 illustrates an exemplary configuration of a cellular system using frequency reuse and distributed antennas, to which the present invention is applied;
FIG. 2 conceptually illustrates the configuration of a joint scheduling and power control system according to an exemplary embodiment of the present invention;
FIG. 3 conceptually illustrates a mapping operation in which each user queue requests subchannels according to an exemplary embodiment of the present invention;
FIG. 4 conceptually illustrates a mapping operation in which subchannels give grants to user queues according to an exemplary embodiment of the present invention;
FIG. 5 conceptually illustrates a mapping operation in which user queues accept subchannels according to an exemplary embodiment of the present invention;
FIG. 6 is a flowchart illustrating a joint scheduling and power control operation in AMC channel mode according to an exemplary embodiment of the present invention; and
FIG. 7 illustrates a channel matrix referred to for describing link selection and elimination according to an exemplary embodiment of the present invention.

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness when their inclusion would obscure appreciation of the invention by a person of ordinary skill in the art.

Throughout the drawings, the same drawing reference numerals will be understood to refer to the same elements, features and structures.

The present invention provides a method and apparatus for decreasing outage probability and maximizing transmission efficiency by efficient interaction among scheduling, power control, and channel allocation. It is assumed for explanatory purposes that a BS and RSs reside within a cell, the BS and the RSs have the same functionalities (each of the BS and RSs is commonly called an RS), and each MS is serviced by an RS. The RSs have their distinctive service areas.

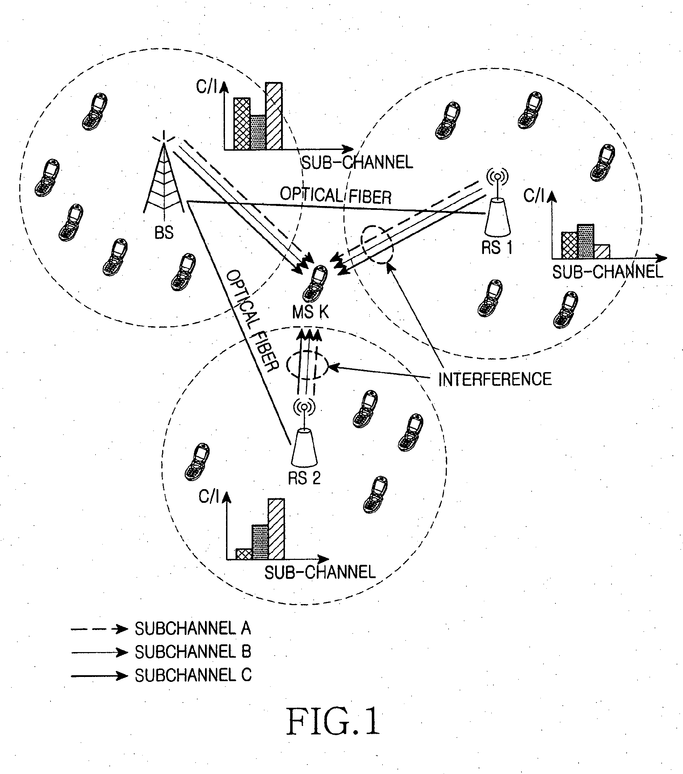

FIG. 1 illustrates an exemplary configuration of a cellular system using frequency reuse and distributed antennas. Referring to FIG. 1, a $k^{th}$ MS can receive information over a plurality of channels, each channel having frequency selectivity. In other words, a different channel has a different channel gain and experiences a different amount/level/degree of interference from other RSs. The BS typically includes a buffer for buffering transmission data, a packet scheduler, and a Radio Resource Manager (RRM) for performing channel coding, modulation, power control, and channel allocation.

Data is typically transmitted during a scheduling period $T_f$ and signaling is performed for the data transmission. Basically, the scheduler selects packets for MSs from the buffer, i.e. user queues according to their priority levels and the RRM manages resources for the packets, prior to transmission.

In FIG. 1, an RS has as many schedulers for subchannels A, B and C and each scheduler selects a user having a good channel status for a subchannel. This operation is called mapping between a user queue and a subchannel in the RS.

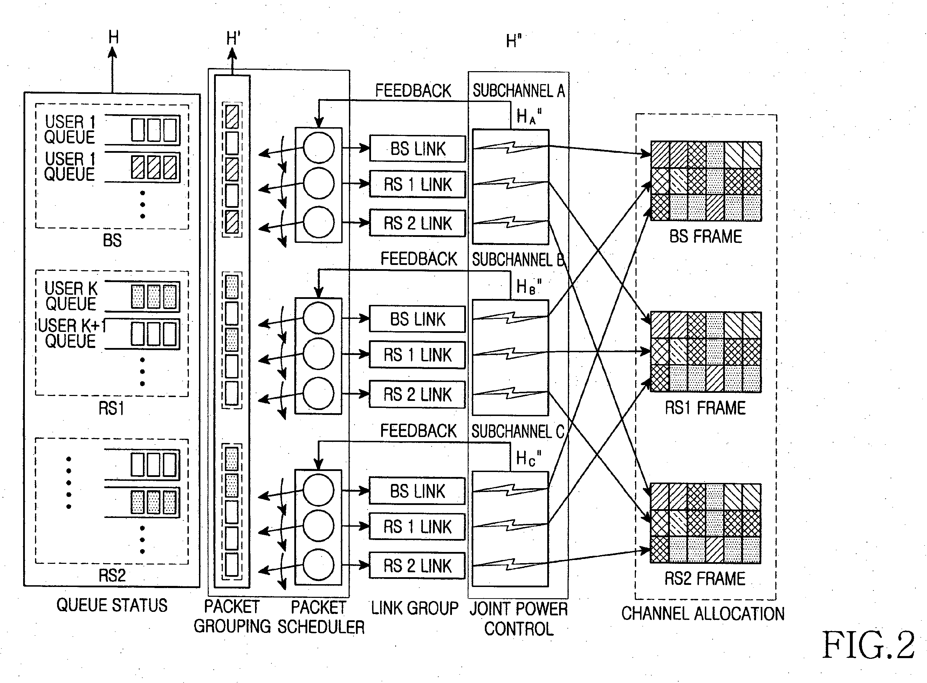

FIG. 2 provides an illustration of an exemplary configuration of a BS for interaction among scheduling, power control, and channel allocation in a cellular system according to the present invention. The concept of a joint scheduling and power control system according to an exemplary embodiment of the present invention will be explained herein below with reference to FIG. 2.

Referring to FIG. 2, packets to be transmitted to the MSs from the BS and RSs are stored in user queues, and packets to be transmitted during a scheduling period $T_f$ are grouped into packet groups. The packet groups may include packets that do not satisfy Quality of Service (QoS) criteria, and the packets of the packet groups should typically be transmitted during the scheduling period $T_f$, as mentioned above, because many schedulers exist for subchannels. For the service areas of the BS and the RSs, the MSs are selected for data transmission during the scheduling period $T_f$. Herein, a channel matrix representing channels between the BS and RSs and MSs for which packets are queued in the user queues is denoted by H and a channel matrix between the BS and RSs and the MSs for which packets are grouped for transmission is denoted by H'. The channel matrix H' is derived from the channel matrix H. The above operation is called packet grouping.

For the service area of each of the BS and the RSs, the packet schedulers select packets from the packet groups for each subchannel, thus selecting links between MSs and the BS and RSs, to which power control will be applied. A channel matrix representing the channels of the selected links is denoted by H". That is, the schedulers select one MS from each service area for each subchannel. This is called mapping. The selected links share the same channel and thus experience mutual interference. When the links of user queues are mapped to the subchannels, power control is performed in parallel for the subchannels. If the result of the power control of each link group does not meet a minimum SINR, then any link that does not meet the minimum SINR is eliminated and another link on which a packet is to be transmitted is selected through feedback. This operation is repeated until the SINR of each link exceeds the minimum SINR. Then, a channel allocation operation follows the power control, for packet transmission.

To represent the interaction among scheduling, power control, and channel allocation by a mathematical model, the following parameters are defined.

Table 1

| Parameter | Description |
|---|---|
| $T_f$ | Scheduling period for allocation of one subchannel |
| k (k=1, ..., K) | MS index |
| M (m=1, ..., M) | RS index |
| $h_{k,m}$ | Channel between $m^{th}$ RS and $k^{th}$ MS |
| s(m) | A set of indexes of MSs serviced by $m^{th}$ RS |
| $P_{k,m}$ | Power allocated to $k^{th}$ MS by $m^{th}$ RS |
| $y_{k,m}$ | Signal received at $k^{th}$ MS from $m^{th}$ RS |
| $W_k$ | Noise at $k^{th}$ MS |
| $P_{min}$, $P_{max}$ | Minimum power and maximum power allocated to $k^{th}$ MS |

Thus, the channel matrix H, a transmission signal matrix X, and a noise matrix W are given as

$$H_n = \begin{bmatrix} h_{1,1,n} & \cdots & h_{1,M,n} \\ \vdots & \ddots & \vdots \\ h_{K,1,n} & \cdots & h_{K,M,n} \end{bmatrix}, \ X_n = \begin{bmatrix} p_{1,1,n} & \cdots & p_{1,M,n} \\ \vdots & \ddots & \vdots \\ p_{K,1,n} & \cdots & p_{K,M,n} \end{bmatrix}, \ W_n = \begin{bmatrix} w_{1,n} \\ \vdots \\ w_{K,n} \end{bmatrix}$$

$$\ldots \ldots (1)$$

A received signal matrix Y on an $n^{th}$ subchannel is expressed as

$$Y_n = H_n X_n^T, \ W_n$$

$$\ldots \ldots (2)$$

An element (j, i) of the matrix $Y_n$ denotes a signal for an $i^{th}$ MS received at a $j^{th}$ MS on the $n^{th}$ subchannel, represented as

$$y_{j,i,n}(j,i) = \sum_{m=1}^{M} h_{j,m,n} \cdot p_{i,m,n}$$

$$\ldots \ldots (3)$$

In Equation (3), the diagonal elements of the received signal matrix $Y_n$ represent desired transmission signals and the other elements of the matrix $Y_n$ represent interference signals. When each RS has a distinctive service area, elements of the matrix $X_n$ representing signals that are not transmitted from the RS become 0s. Thus,

$$p_{k,m,n} = \begin{cases} p_{k,m,n} & \text{if } k \in s(m) \\ 0 & \text{otherwise} \end{cases}$$

$$\ldots \ldots (4)$$

The packet schedulers select one MS for each service area based on the channel matrix H" as defined in FIG 2 by appropriate mapping. H" is an MxM square matrix. Then the elements (j, i) of the matrix $Y_n$ is given as

$$y_{j,i,n} = h_{j,m,n} \cdot p_{i,m}, n, \quad i \in s(m)$$

$$\ldots \ldots (5)$$

A transmission signal and an interference signal received at a $k^{th}$ MS on the $n^{th}$ channel are expressed as Equation (6) and Equation (7), respectively.

$$S_{k,n} = h_{k,m,n} \cdot p_{k,m,n}, \quad k \in s(m)$$

$$\ldots \ldots (6)$$

$$I_{k,n} = \sum_{i \neq m}^{M} h_{k,i,n} \cdot p_{s(i),i,n}$$

$$\ldots \ldots (7)$$

The SINR of the $n^{th}$ channel at the $k^{th}$ MS is computed by

$$\gamma_n^k = \frac{h_{k,m,n} p_{k,m,n}}{\sum_{i \neq m}^{M} h_{k,i,n} \cdot p_{s(i),i,n} + w_{n,k}}$$

$$\ldots \ldots (8)$$

To map user queues to subchannels for generation of the channel matrix H" defined in FIG. 2, a channel status is defined by

$$I_{k,n} = \sum_{i \neq m} \left( \frac{h_{k,i,n}}{h_{k,m,n}} \right), \quad k \in s(m)$$

$$\ldots \ldots (9)$$

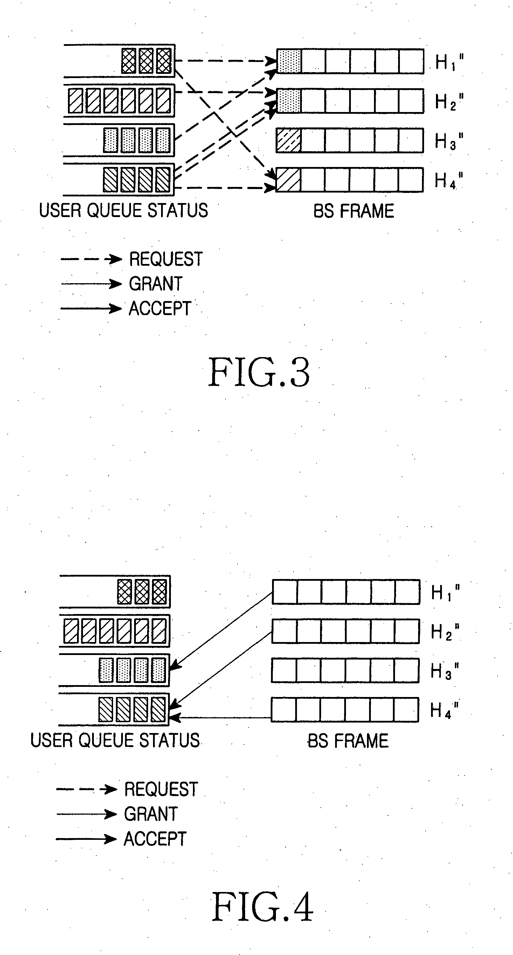

where $I_{k,n}$ denotes the amount of interference received on the $n^{th}$ subchannel in the $k^{th}$ MS. As $I_{k,n}$ decreases, the $k^{th}$ MS is in a better channel status of the $n^{th}$ subchannel. The $k^{th}$ MS has $I_{k,n}$ values for all subchannels. The mapping is performed in three steps, Request, Grant, and Accept as illustrated in FIGs. 3, 4 and 5.

Request: user queues request $N_{request}$ subchannels offering good channel status to the user queues.

Grant: each subchannel gives a grant to a user queue with the lowest value of Equation (9) among requesting user queues.

Accept: if two or more subchannels are granted to a user queue, the user queue selects a subchannel that minimizes Equation (9).

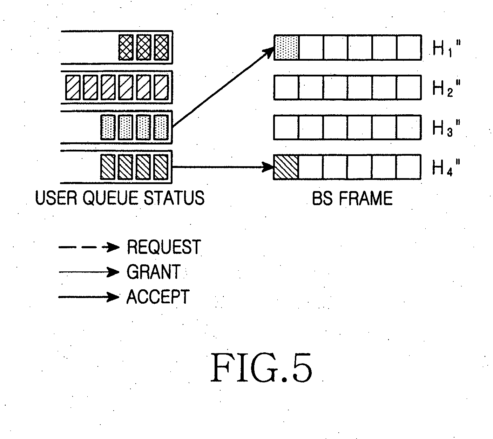

FIG. 3 conceptually illustrates an exemplary embodiment of the present invention wherein during a mapping operation each user queue requests subchannels, and FIG. 4 conceptually illustrates an exemplary embodiment of the present invention wherein during a mapping operation subchannels are granted to user queues. Moreover, FIG. 5 conceptually illustrates an exemplary embodiment of the present invention wherein during a mapping operation the user queues accepts subchannels.

Referring to FIGs. 3, 4 and 5, the user queues request $N_{request}$ subchannels offering good channel status. The $N_{request}$ subchannels are granted to user queues that minimize Equation (9). If two or more subchannels are granted to a user queue, the user queue selects a subchannel that minimizes Equation (9) among the subchannels. The operation is repeated until all subchannels are allocated.

According to an exemplary embodiment of the present invention, when a matrix H" is created for each subchannel through the mapping, a joint power control is performed on a subchannel basis. To render the SINRs of MSs uniform, the solution of Equation (8) should be the same for the MSs. However, since Equation (8) is non-linear, a sub-optimal power control algorithm is derived by converting Equation (8) to a linear formula taking the form of *maximum$^k$*. This sub-optimal power control algorithm is written in Table 2 below. Since power control is performed on a subchannel basis, a subchannel index n is not shown.

Table 2

Objective function
Maximize
Constraints
1. minimum SINR to be ensured

$$\frac{h_{k,m}p_k}{\sum_{i\neq m}^{M} h_{k,i} \cdot p_i + w_k} \geq \gamma^{targetSINR}, \forall k$$

2. SINR difference

$$h_{k,m}p_k - \sum_{i\neq m}^{M} h_{k,i} \cdot p_i - w_k \geq \delta, \forall k$$

3. power range

$$p_{min} \leq p_k \leq p_{max}, \forall k$$

Referring to Table 2, the difference between a received signal and interference plus noise is set as an optimization constraint (Constraint 2 in Table 2), instead of the ratio of the received signal to the interference signal, and a function that maximizes the variable is set as an objective function in the sub-optimal power control algorithm. Constraint 1 describes a target SINR for MSs in the power control and Constraint 3 describes the maximum and minimum values of transmit power. The power control is performed in parallel for the respective subchannels. That is, scheduling becomes different depending on the presence or absence of the optimal solution of the power control.

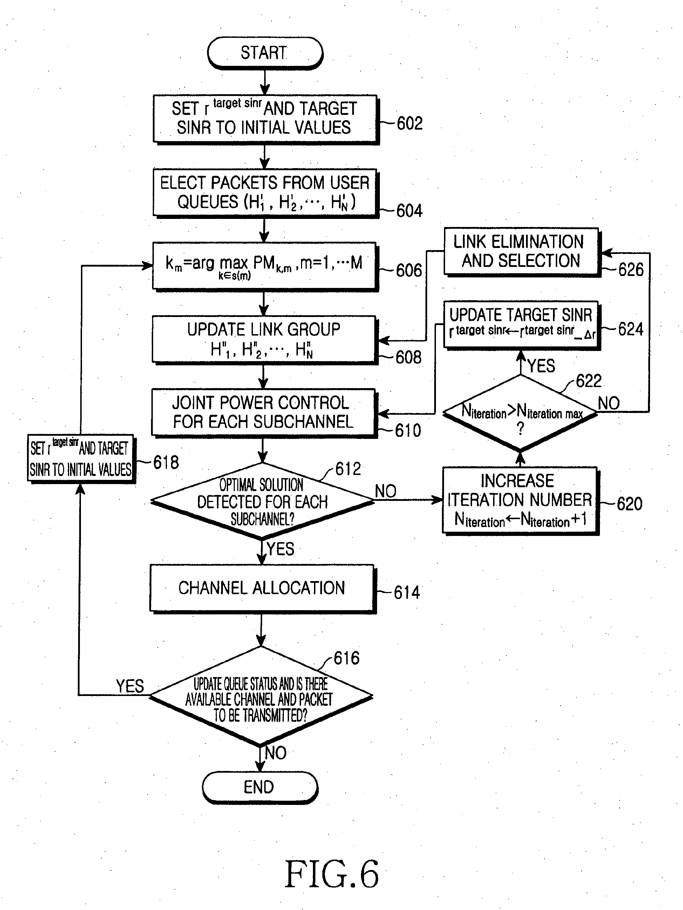

FIG. 6 is a flowchart illustrating a joint scheduling and power control operation in AMC channel mode according to an exemplary embodiment of the present invention.

Referring to FIG. 6, the target SINR and *targ etSINR* are set to initial values in step 602 and packets are selected from user queues of the BS and each RS according to Equation (10) in steps 604 and 606.

$$k_m^* = \arg \max_{k\in s(m)} PM_{k,m}$$

. . . . . (10)

where $PM_{k,m}$ denotes a priority metric for a $k^{th}$ user queue in an $m^{th}$ RS. The priority metric can be a time delay or a queue length.

The channel matrix H" is created for the selected packets and power control and channel allocation are performed. Scheduling is completed when there are no more packets to be transmitted or no more channels to be allocated. These operations are performed when the power control is successful. If the optimal solution of the power control does not exist, link elimination and addition is performed and then power control is performed in step 608. A criterion for the link selection is expressed as Equation (11).

$$k_m^* = arg \min_{k \in s(m)} \sum_{i \neq m} \left( \frac{h_{k,i,n}}{h_{k,m,n}} \right)$$

which implies that a link in the best channel status of an n<sup>th</sup> subchannel is selected in the service area of the m<sup>th</sup> RS.

A criterion for the link elimination is expressed as Equation (12).

$$k^* = arg \max_{k \in s(m)} \left( \sum_{i \neq m} \left( \frac{h_{k,i,n}}{h_{k,m,n}} \right) + \sum_{j \neq m} \left( \frac{h_{k,j,n}}{h_{s(j),j,n}} \right) \right)$$

$$. . . . . (12)$$

where $h_{s(j),j,n}$ denotes the channel status of the n<sup>th</sup> subchannel between a j<sup>th</sup> RS and an MS s(j) within the service area of the j<sup>th</sup> RS.

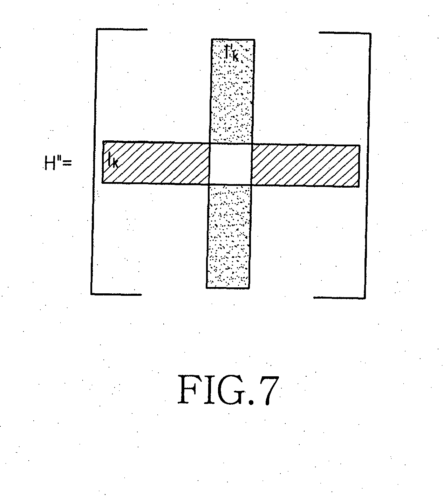

Equation (11) and Equation (12) assume the property depicted in FIG. 7. FIG. 7 illustrates a channel matrix referred to for describing link selection and elimination according to an exemplary embodiment of the present invention. Referring to FIG. 7, a link with the highest sum of interference $I_k$ received at an MS from other serving BS or RSs and interference $I'_k$ at the MS from its serving BS or RS is selected from the matrix H". In the absence of an optimal solution of power control, the link is eliminated and a particular link is selected to fill the space. Then a joint power control is performed.

Thus, a joint power control is performed on the matrix H" updated by the link elimination and addition according to Equation (11) and Equation (12) in step 610. In the absence of an optimal solution in step 612, the link elimination and addition is performed at step 620. As the number of H" updates through link elimination and addition increases, computation complexity increases, causing operational problems. Therefore, it is typically necessary to limit the number of H" updates, taking into account limited power and computation volume. To reduce the number of H" updates, the target SINR is reduced and then power control is performed for the decreased target SINR. Since the probability of achieving an optimal solution is increased by alleviating Constraint 1 in Table 2, the target SINR is decreased to or below a predetermined value. The number of iterations $N_{iteration}$ is counted each time the power control is performed in step 620. If the number of iterations $N_{iteration}$ is larger than a maximum iteration number $N_{iteration\,max}$ in step 622, the target SINR is decreased to a predetermined value in step 624 and the procedure returns to step 610. If the number of iterations $N_{iteration}$ is less than or equal to the maximum iteration number $N_{iteration\,max}$ in step 622, a link is replaced with another link according to Equation (11) and Equation (12) in step 626, thus updating the link group H" in step 608.

On the other hand, in the presence of an optimal solution in step 612, a channel is allocated in step 614. Then the status of the user queues is updated and it is determined in step 616 whether there remains a channel to be allocated and a packet to be transmitted. If there is an available channel and a packet to be transmitted, the target SINR and $^{t\,arg\,et}SINR$ are set to initial values in step 618 and the procedure returns to step 606. In the absence of an available channel or a packet to be transmitted in step 616, the scheduling is completed.

As is apparent from the above exemplary description, the present invention overcomes outage caused by interference from neighbor service areas and increases transmission efficiency through efficient interaction among scheduling, power control, and channel allocation in a multi-channel DAS using frequency reuse and common power control.

While the invention has been shown and described with reference to certain exemplary embodiments of the present invention thereof, it will be understood by those skilled in the art that various changes in form and details may be made therein without departing from the scope of the present invention and the scope of the appended claims. A person of ordinary skill in the art understands and appreciates that the examples provided herein that are shown in the drawings are provided for explanatory purposes, and the invention is not limited to the exemplary embodiments shown and described.

**Claims**

1.  A joint scheduling method for increasing frequency efficiency and fairness in a multi-channel distributed antenna system using frequency reuse and common control power, comprising:

    (a) selecting packets (604) for transmission to mobile stations, said selecting taking into account a Quality of Service, QoS, in at least one of a base station and a relay station, grouping the packets into packet groups, and mapping packets from the MSs to subchannels;

(b) selecting packets from the packet groups formed in step (a), grouping links corresponding to the packets into a link group, and performing a joint power control on the link group;

(c) performing link elimination and link addition in the link group until optimal solutions are achieved for the links of the link group in the joint power control; and

(d) allocating channels (614) to the links when the optimal solutions are achieved for the links in step (c) and updating (616) the status of a user queue for at least one of the BS and the RS.

2. The joint scheduling method of claim 1, wherein the QoS-based packet selection in step (a) comprises:

selecting the packets for the MSs according to priority levels of the MSs;
generating a channel matrix based on the packets of the MSs by mapping the packets to subchannels according to the following equation:

$$I_{k,n} = \sum_{i \neq m} \left( \frac{h_{k,i,n}}{h_{k,m,n}} \right), \quad k \in s(m)$$

where $I_{k,n}$ denotes the amount of interference received on an $n^{th}$ subchannel at a $k^{th}$ MS and as $I_{k,n}$ decreases, and the $k^{th}$ MS is in a better channel status of the $n^{th}$ subchannel, the $k^{th}$ MS having $I_{k,n}$ values for all subchannels.

3. The joint scheduling method of claim 2, wherein the QoS-based packet selection comprises selecting the packets for the MSs according to priority levels of the MSs by the following equation:

$$k_m^* = \arg \max_{k \in s(m)} PM_{k,m}$$

where $PM_{k,m}$ denotes a priority metric for a $k^{th}$ user queue in an $m^{th}$ RS and the priority metric can be one of time delay and a queue length.

4. The joint scheduling method of claim 2, wherein the mapping comprises:

requesting $N_{request}$ subchannels offering good channel status for user queues;
granting each of $N_{request}$ subchannels to a user queue among the user queues according to said equation;
accepting a subchannel that minimizes said equation for a user queue, if at least two subchannels are granted for the user queue; and
repeating the requesting, granting, and the accepting steps until all subchannels are allocated.

5. The joint scheduling method of one of claims 1 to 4, wherein the link elimination and addition comprises in step (c):

(i) counting the number of power control iterations each time an optimal solution does not exist;
(ii) performing a joint power control after decreasing a target Signal-to-Interference and Noise Ratio, SINR, if the number of power control iterations is larger than a predetermined value; and
(iii) updating the link group by eliminating a link from the link group and selecting another link and performing a joint power control on the updated link group.

6. The joint scheduling method of claim 5, wherein the link group updating in sub-step (iii) comprises selecting another link according to:

$$k_m^* = arg \min_{k \in s(m)} \sum_{i \neq m} \left( \frac{h_{k,i,n}}{h_{k,m,n}} \right)$$

which implies that a link in the best channel status of an $n^{th}$ subchannel is selected in the service area of an $m^{th}$ RS, and eliminating a link according to:

$$k^* = arg \max_{k \in s(m)} \left( \sum_{i \neq m} \left( \frac{h_{k,i,n}}{h_{k,m,n}} \right) + \sum_{j \neq m} \left( \frac{h_{k,j,n}}{h_{s(j),j,n}} \right) \right)$$

where $h_{s(j),j,n}$ denotes the status of an $n^{th}$ subchannel between a $j^{th}$ RS and an MS s(j) within the service area of the $j^{th}$ RS.

**7.** A joint scheduling apparatus for increasing frequency efficiency and fairness in a multi-channel distributed antenna system using frequency reuse and common control power, comprising:

means for selecting packets for transmission to mobile stations, said selecting taking into account a Quality of Service, QoS, in at least one of a base station and a relay station and grouping the packets into packet groups;
means for selecting packets from the packet groups formed in step (a), grouping links corresponding to the packets into a link group, and for performing a joint power control on the link group;
means for performing link elimination and link addition in the link group until optimal solutions are achieved for the links of the link group in the joint power control; and
means for allocating channels to the links when the optimal solutions are achieved for the links and updating the status of a user queue for at least one of the BS and the RS.

**8.** The joint scheduling apparatus according to claim 7, wherein the means for packet selection for transmission to the MSs comprises means for selecting the packets for the MSs according to priority levels of the MSs, and for generating a channel matrix based on the packets of the MSs by mapping the packets to subchannels according to the following equation:

$$I_{k,n} = \sum_{i \neq m} \left( \frac{h_{k,i,n}}{h_{k,m,n}} \right), \quad k \in s(m)$$

where $I_{k,n}$ denotes the amount of interference received on an $n^{th}$ subchannel at a $k^{th}$ MS and as $I_{k,n}$ decreases, and the $k^{th}$ MS is in a better channel status of the $n^{th}$ subchannel, the $k^{th}$ MS having $I_{k,n}$ values for all subchannels.

**9.** The joint apparatus according to claim 8, wherein the means for QoS-based packet selection comprises means for selecting the packets for the MSs according to priority levels of the MSs by the following equation

$$k_m^* = arg \max_{k \in s(m)} PM_{k,m}$$

where $PM_{k,m}$ denotes a priority metric for a $k^{th}$ user queue in an $m^{th}$ RS and the priority metric can be one of a time delay and a queue length.

**10.** The joint scheduling apparatus of claim 8, wherein the means for mapping comprises means for requesting $N_{request}$ subchannels offering good channel status for user queues, and means for granting each of $N_{request}$ subchannels to a user queue among the user queues according to said equation, and for accepting a subchannel that minimizes said equation for a user queue, if at least two subchannels are granted for the user queue; and repeating the requesting, granting, and the accepting steps until all subchannels are allocated.

11. The joint scheduling apparatus of one of claims 7 to 10, wherein the means for link elimination and additionally comprises means for: (i) counting the number of power control iterations each time an optimal solution does not exist; (ii) performing a joint power control after decreasing a target Signal-to-Interference and Noise Ratio, SINR, if the number of power control iterations is larger than a predetermined value; and (iii) updating the link group by eliminating a link from the link group and selecting another link and performing a joint power control on the updated link group.

12. The joint scheduling apparatus of claim 11, wherein the link group means for updating in sub-step (iii) comprises selecting another link according to:

$$k_m^\bullet = arg \min_{k \in s(m)} \sum_{i \neq m} \left( \frac{h_{k,i,n}}{h_{k,m,n}} \right)$$

which implies that a link in the best channel status of an $n^{th}$ subchannel is selected in the service area of an $m^{th}$ RS, and eliminating a link according to:

$$k^\bullet = arg \max_{k \in s(m)} \left( \sum_{i \neq m} \left( \frac{h_{k,i,n}}{h_{k,m,n}} \right) + \sum_{j \neq m} \left( \frac{h_{k,j,n}}{h_{s(j),j,n}} \right) \right)$$

where $h_{s(j),j,n}$ denotes the status of an $n^{th}$ subchannel between a $j^{th}$ RS and an MS s(j) within the service area of the $j^{th}$ RS.

**Patentansprüche**

1. Gemeinsames Planungsverfahren zum Erhhen der Frequenzeffizienz und der Fairness in einem verteilten Mehrkanal-Antennensystem unter Verwendung einer Frequenzwiederverwendung und einer gemeinsamen Leistungssteuerung, umfassend:

   (a) Auswhlen von Paketen (604) fr das Senden an Mobilstationen, wobei das Auswhlen die Dienstgte (QoS) in einer Basisstation und/oder einer Relaisstation bercksichtigt, Gruppieren der Pakete in Paketgruppen und Mappen von Paketen aus den Mobilstationen auf Subkanle,
   (b) Auswhlen von Paketen aus den in Schritt (a) gebildeten Paketgruppen, Gruppieren von Verknpfungen in Entsprechung zu den Paketen zu einer Verknpfungsgruppe und Durchfhren einer gemeinsamen Leistungsteuerung auf der Verknpfungsgruppe,
   (c) Durchfhren einer Verknpfungsentfernung und einer Verknpfungshinzufgung in der Verknpfungsgruppe, bis optimale Lsungen fr die Verknpfungen der Verknpfungsgruppe in der gemeinsamen Leistungssteuerung erzielt werden, und
   (d) Zuweisen von Kanlen (614) zu den Verknpfungen, wenn die optimalen Lsungen fr die Verknpfungen in Schritt (c) erzielt werden, und Aktualisieren (616) des Status einer Benutzerwarteschlange fr die Basisstation und/oder die Relaisstation.

2. Gemeinsames Planungsverfahren nach Anspruch 1, wobei die Dienstgte-basierte Paketauswahl in dem Schritt (a) umfasst:

   Auswhlen der Pakete fr die Mobilstationen in bereinstimmung mit Priorittsstufen der Mobilstationen,
   Erzeugen einer Kanalmatrix basierend auf den Paketen der Mobilstationen durch das Mappen der Pakete auf Subkanle gem der folgenden Gleichung:

$$l_{k,n} = \sum_{i \neq m}\left(\frac{h_{k,i,n}}{h_{k,m,n}}\right), \; k \in s(m)$$

wobei $l_{k,n}$ die auf einem n-ten Subkanal an einer k-ten Mobilstation empfangene Strungsgre angibt und wobei, wenn $l_{k,n}$ kleiner wird und sich die k-te Mobilstation in einem besseren Kanalstatus des n-ten Subkanals befindet, die k-te Mobilstation $l_{k,n}$ Werte fr alle Subkanle aufweist.

3. Gemeinsames Planungsverfahren nach Anspruch 2, wobei die Dienstgte-basierte Paketauswahl das Auswhlen der Pakete fr die Mobilstationen gem Priorittsstufen der Mobilstationen durch die folgende Gleichung umfasst:

$$k_m^* = \arg \; \max_{k \in s(m)} PM_{k,m}$$

wobei $PM_{k,m}$ eine Priorittsmetrik fr eine k-te Benutzerwarteschlange in einer m-ten Relaisstation angibt und die Priorittsmetrik eine Zeitverzgerung oder eine Warteschlangenlnge sein kann.

4. Gemeinsames Planungsverfahren nach Anspruch 2, wobei das Mapping umfasst:

Anfragen von $N_{request}$ Subkanlen, die einen guten Kanalstatus fr Benutzerwarteschlangen bieten,
Gewhren jedes der $N_{request}$ Subkanle fr eine Benutzerwarteschlange aus den Benutzerwarteschlangen gem der Gleichung,
Annehmen eines Subkanals, der die Gleichung fr eine Benutzerwarteschlange minimiert, wenn wenigstens zwei Subkanle fr die Benutzerwarteschlange gewhrt werden, und
Wiederholen der Schritte zum Anfragen, Gewhren und Annehmen, bis alle Subkanle zugewiesen wurden.

5. Gemeinsames Planungsverfahren nach einem der Ansprche 1 bis 4, wobei die Verknpfungsentfernung und -hinzufgung in dem Schritt (c) umfasst:

(i) Zhlen der Anzahl von Leistungssteuerungswiederholungen jedes Mal, wenn keine optimale Lsung vorhanden ist,
(ii) Durchfhren einer gemeinsamen Leistungssteuerung nach dem Vermindern eines Ziel-Signal-zu-Strung-und-Rauschen-Verhltnisses (SINR), wenn die Anzahl der Leistungssteuerungswiederholungen grer als ein vorbestimmter Wert ist, und
(iii) Aktualisieren der Verknpfungsgruppe durch das Entfernen einer Verknpfung aus der Verknpfungsgruppe und das Auswhlen einer anderen Verknpfung, sowie Durchfhren einer gemeinsamen Leistungssteuerung auf der aktualisierten Verknpfungsgruppe.

6. Gemeinsames Planungsverfahren nach Anspruch 5, wobei das Aktualisieren der Verknpfungsgruppe in dem Teilschritt (iii) das Auswhlen einer anderen Verknpfung gem der folgenden Gleichung umfasst:

$$k_m^* = \arg \; \min_{k \in s(m)} \sum_{j \neq m}\left(\frac{h_{k,i,n}}{h_{k,m,n}}\right)$$

was bedeutet, dass eine Verknpfung in dem besten Kanalstatus eines n-ten Subkanals in dem Dienstbereich einer m-ten RS ausgewhlt wird,
und das Beseitigen einer Verknpfung gem der folgenden Gleichung umfasst:

$$k^* = \arg\ \max_{k \in s(m)}\left(\sum_{i \neq m}\left(\frac{h_{k,i,n}}{h_{k,m,n}}\right) + \sum_{j \neq m}\left(\frac{h_{h,j,n}}{h_{s(j),j,n}}\right)\right)$$

wobei $h_{s(j),j,n}$ den Status eines n-ten Subkanals zwischen einer j-ten Relaisstation und einer MS s(j) in dem Dienstbereich der j-ten Relaisstation angibt.

7. Gemeinsame Planungsvorrichtung zum Erhhen der Frequenzeffizienz und der Fairness in einem verteilten Mehrkanal-Antennensystem unter Verwendung einer Frequenzwiederverwendung und einer gemeinsamen Leistungssteuerung, umfassend:

eine Einrichtung zum Auswhlen von Paketen fr das Senden an Mobilstationen, wobei das Auswhlen die Dienstgte (QoS) in einer Basisstation und/oder einer Relaisstation bercksichtigt, und zum Gruppieren der Pakete in Paketgruppen,
eine Einrichtung zum Auswhlen von Paketen aus den in Schritt (a) gebildeten Paketgruppen, zum Gruppieren von Verknpfungen in Entsprechung zu den Paketen zu einer Verknpfungsgruppe und zum Durchfhren einer gemeinsamen Leistungsteuerung auf der Verknpfungsgruppe,
eine Einrichtung zum Durchfhren einer Verknpfungsentfernung und einer Verknpfungshinzufgung in der Verknpfungsgruppe, bis optimale Lsungen fr die Verknpfungen der Verknpfungsgruppe in der gemeinsamen Leistungssteuerung erzielt werden, und
eine Einrichtung zum Zuweisen von Kanlen zu den Verknpfungen, wenn die optimalen Lsungen fr die Verknpfungen erzielt werden, und Aktualisieren des Status einer Benutzerwarteschlange fr die Basisstation und/oder die Relaisstation.

8. Gemeinsame Planungsvorrichtung nach Anspruch 7, wobei die Einrichtung fr die Paketauswahl fr das Senden an die Mobilstationen Einrichtungen zum Auswhlen der Pakete fr die Mobilstationen in bereinstimmung mit Priorittsstufen der Mobilstationen und zum Erzeugen einer Kanalmatrix basierend auf den Paketen der Mobilstationen durch das Mappen der Pakete auf Subkanle gem der folgenden Gleichung umfasst:

$$I_{k,n} = \sum_{i \neq m}\left(\frac{h_{k,i,n}}{h_{k,m,n}}\right),\ k \in s(m)$$

wobei $I_{k,n}$ die auf einem n-ten Subkanal an einer k-ten Mobilstation empfangene Strungsgre angibt und wobei, wenn $I_{k,n}$ kleiner wird und sich die k-te Mobilstation in einem besseren Kanalstatus des n-ten Subkanals befindet, die k-te Mobilstation $I_{k,n}$ Werte fr alle Subkanle aufweist.

9. Gemeinsame Planungsvorrichtung nach Anspruch 8, wobei die Mittel fr eine Dienstgte-basierte Paketauswahl eine Einrichtung zum Auswhlen der Pakete fr die Mobilstationen gem Priorittsstufen der Mobilstationen durch die folgende Gleichung umfasst:

$$k_m^* = \arg\ \max_{k \in s(m)} PM_{k,m}$$

wobei $PM_{k,m}$ eine Priorittsmetrik fr eine k-te Benutzerwarteschlange in einer m-ten Relaisstation angibt und die Priorittsmetrik eine Zeitverzgerung oder eine Warteschlangenlnge sein kann.

10. Gemeinsame Planungsvorrichtung nach Anspruch 8, wobei die Einrichtung zum Mappen Einrichtungen zum Anfragen von $N_{request}$ Subkanlen, die einen guten Kanalstatus fr Benutzerwarteschlangen bieten, und eine Einrichtung zum Gewhren jedes der $N_{request}$ Subkanle fr eine Benutzerwarteschlange aus den Benutzerwarteschlangen gem der Gleichung und zum Annehmen eines Subkanals, der die Gleichung fr eine Benutzerwarteschlange minimiert, wenn wenigstens zwei Subkanle fr die Benutzerwarteschlange gewhrt werden, umfasst, wobei die Schritte zum Anfragen, Gewhren und Annehmen wiederholt werden, bis alle Subkanle zugewiesen wurden.

11. Gemeinsame Planungsvorrichtung nach einem der Ansprche 7 bis 10, wobei die Einrichtung zur Verknpfungsbeseitigung und -hinzufgung weiterhin Einrichtungen umfasst zum: (i) Zhlen der Anzahl von Leistungssteuerungswiederholungen jedes Mal, wenn keine optimale Lsung vorhanden ist, (ii) Durchfhren einer gemeinsamen Leistungssteuerung nach dem Vermindern eines Ziel-Signal-zu-Strung-und-Rauschen-Verhltnisses (SINR), wenn die Anzahl der Leistungssteuerungswiederholungen grer als ein vorbestimmter Wert ist, und (iii) Aktualisieren der Verknpfungsgruppe durch das Entfernen einer Verknpfung aus der Verknpfungsgruppe und das Auswhlen einer anderen Verknpfung, sowie Durchfhren einer gemeinsamen Leistungssteuerung auf der aktualisierten Verknpfungsgruppe.

12. Gemeinsame Planungsvorrichtung nach Anspruch 11, wobei die Einrichtung zum Aktualisieren der Verknpfungsgruppe in dem Teilschritt (ii) das Auswhlen einer anderen Verknpfung gem der folgenden Gleichung umfasst:

$$k_m^* = \arg \min_{k \in s(m)} \sum_{j \neq m} \left( \frac{h_{k,i,n}}{h_{k,m,n}} \right)$$

was bedeutet, dass eine Verknpfung in dem besten Kanalstatus eines n-ten Subkanals in dem Dienstbereich einer m-ten RS ausgewhlt wird,
und das Beseitigen einer Verknpfung gem der folgenden Gleichung umfasst:

$$k^* = \arg \max_{k \in s(m)} \left( \sum_{i \neq m} \left( \frac{h_{k,i,n}}{h_{k,m,n}} \right) + \sum_{j \neq m} \left( \frac{h_{h,j,n}}{h_{s(j),j,n}} \right) \right)$$

wobei $h_{s(j),j,n}$ den Status eines n-ten Subkanals zwischen einer j-ten Relaisstation und einer MS s(j) in dem Dienstbereich der j-ten Relaisstation angibt.

## Revendications

1. Procd d'ordonnancement conjoint pour augmenter l'quit et l'efficacit de frquence dans un systme d'antennes distribu multicanal l'aide d'une rutilisation de frquence et d'une puissance de commande commune, comprenant :

   (a) la slection de paquets (604) pour leur transmission des stations mobiles MS, ladite slection prenant en compte une qualit de service QoS, soit Quality of Service, dans au moins une station parmi une station de base BS et une station relais RS, le groupement des paquets en groupes de paquets, et le mappage de paquets depuis les MS vers des sous-canaux ;
   (b) la slection de paquets parmi les groupes de paquets forms l'tape (a), le groupement de liaisons correspondant aux paquets en un groupe de liaisons, et la mise en oeuvre d'une commande de puissance conjointe sur le groupe de liaisons ;
   (c) la mise en oeuvre d'une limination de liaisons et d'un ajout de liaisons dans le groupe de liaisons jusqu' ce que des solutions optimales soient obtenues pour les liaisons du groupe de liaisons dans la commande de puissance conjointe ; et
   (d) l'attribution de canaux (614) aux liaisons quand les solutions optimales sont obtenues pour les liaisons l'tape (c), et la mise jour (616) de l'tat d'une file d'attente d'utilisateurs pour au moins une station parmi la BS et la RS.

2. Procd d'ordonnancement conjoint selon la revendication 1, dans lequel la slection de paquets sur base de leur QoS l'tape (a) comprend :

   la slection des paquets pour les MS en fonction de niveaux de priorit des MS ;
   la gnration d'une matrice de canal sur base des paquets des MS en mappant les paquets par rapport des sous-canaux en fonction de l'quation suivante :

$$I_{k,n} = \sum_{i \neq m} \left( \frac{h_{k,i,n}}{h_{k,m,n}} \right), \quad k \in s(m)$$

o $I_{k,n}$ dsigne la quantit d'interfrence reue sur un ne sous-canal une $k^e$ MS et lorsque $I_{k,n}$ diminue, et la $k^e$ MS se trouve dans un meilleur tat de canal du ne sous-canal, la $k^e$ MS comportant des valeurs $I_{k,n}$ pour tous les sous-canaux.

3. Procd d'ordonnancement conjoint selon la revendication 2, dans lequel la slection de paquets sur base de leur QoS comprend la slection des paquets pour les MS en fonction de niveaux de priorit des MS selon l'quation suivante :

$$k_m^{\bullet} = \arg \max_{k \in s(m)} PM_{k,m}$$

o $PM_{k,m}$ dsigne une mesure de priorit pour une $k^e$ file d'attente d'utilisateurs dans une $m^e$ RS, et la mesure de priorit peut tre une mesure parmi un dlai temporel et une longueur de file d'attente.

4. Procd d'ordonnancement conjoint selon la revendication 2, dans lequel le mappage comprend :

la demande de sous-canaux $N_{request}$ offrant un bon tat de canal pour des files d'attente d'utilisateurs ;
l'attribution de chacun des sous-canaux $N_{request}$ une file d'attente d'utilisateurs parmi les files d'attente d'utilisateurs selon ladite quation ;
l'acceptation d'un sous-canal qui minimise ladite quation pour une file d'attente d'utilisateurs, si au moins deux sous-canaux sont attribus pour la file d'attente d'utilisateurs ; et
la rptition des tapes de demande, d'attribution et d'acceptation jusqu' ce que tous les sous-canaux soient attribus.

5. Procd d'ordonnancement conjoint selon l'une des revendications 1 4, dans lequel l'limination et l'addition de liaisons comprend l'tape (c) :

(i) le comptage du nombre d'itrations de commande de puissance chaque fois qu'il n'existe pas de solution optimale ;
(ii) la mise en oeuvre d'une commande de puissance conjointe aprs rduction d'un rapport cible signal interfrence plus bruit SINR, soit Signal-to-Interference and Noise Ratio, si le nombre d'itrations de commande de puissance est suprieur une valeur prdtermine ; et
(iii) la mise jour du groupe de liaisons en liminant une liaison du groupe de liaisons et en slectionnant une autre liaison, et la mise en oeuvre d'une commande de puissance conjointe sur le groupe de liaisons mis jour.

6. Procd d'ordonnancement conjoint selon la revendication 5, dans lequel la mise jour du groupe de liaisons la sous-tape (iii) comprend la slection d'une autre liaison selon l'expression :

$$k_m^{\bullet} = \arg \min_{k \in s(m)} \sum_{i \neq m} \left( \frac{h_{k,i,n}}{h_{k,m,n}} \right)$$

qui implique qu'une liaison dans le meilleur tat de canal d'un ne sous-canal est slectionne dans la zone de service d'une $m^e$ station relais RS, et l'limination d'une liaison selon :

$$k^{\bullet} = \arg \max_{k \in s(m)} \left( \sum_{i \neq m} \left( \frac{h_{k,i,n}}{h_{k,m,n}} \right) + \sum_{j \neq m} \left( \frac{h_{k,j,n}}{h_{s(j),j,n}} \right) \right)$$

o $h_{s(j),j,n}$ dsigne l'tat d'un $n^e$ sous-canal entre une $j^e$ RS et une MS $s(j)$ dans la zone de service de la $j^e$ RS.

7.  Appareil d'ordonnancement conjoint pour augmenter l'quit et l'efficacit de frquence dans un systme d'antennes distribu multicanal l'aide d'une rutilisation de frquence et d'une puissance de commande commune, comprenant :

    un moyen de slection de paquets pour leur transmission des stations mobiles, ladite slection prenant en compte une qualit de service QoS dans au moins une station parmi une station de base BS et une station relais RS, et de groupement des paquets en groupes de paquets ;
    un moyen de slection de paquets parmi les groupes de paquets forms l'tape (a), de groupement de liaisons correspondant aux paquets en un groupe de liaisons, et de mise en oeuvre d'une commande de puissance conjointe sur le groupe de liaisons ;
    un moyen de mise en oeuvre d'une limination de liaisons et d'un ajout de liaisons dans le groupe de liaisons jusqu' ce que des solutions optimales soient obtenues pour les liaisons du groupe de liaisons dans la commande de puissance conjointe ; et
    un moyen d'attribution de canaux aux liaisons quand les solutions optimales sont obtenues pour les liaisons et de mise jour de l'tat d'une file d'attente d'utilisateurs pour au moins une station parmi la BS et la RS.

8.  Appareil d'ordonnancement conjoint selon la revendication 7, dans lequel le moyen de slection de paquets pour leur transmission aux MS comprend un moyen de slection des paquets pour les MS en fonction de niveaux de priorit des MS, et de gnration d'une matrice de canal sur base des paquets des MS en mappant les paquets par rapport des sous-canaux en fonction de l'quation suivante :

$$I_{k,n} = \sum_{i \neq m} \left( \frac{h_{k,i,n}}{h_{k,m,n}} \right), \quad k \in s(m)$$

o $I_{k,n}$ dsigne la quantit d'interfrence reue sur un $n^e$ sous-canal une $k^e$ MS et lorsque $I_{k,n}$ diminue, et la $k^e$ MS se trouve dans un meilleur tat de canal du $n^e$ sous-canal, la $k^e$ MS comportant des valeurs $I_{k,n}$ pour tous les sous-canaux.

9.  Appareil conjoint selon la revendication 8, dans lequel le moyen de slection de paquets sur base de leur QoS comprend un moyen de slection des paquets pour les MS en fonction de niveaux de priorit des MS selon l'quation suivante :

$$k_m^{\bullet} = \arg \max_{k \in s(m)} PM_{k,m}$$

o $PM_{k,m}$ dsigne une mesure de priorit pour une $k^e$ file d'attente d'utilisateurs dans une $m^e$ RS et la mesure de priorit peut tre une mesure parmi un dlai temporel et une longueur de file d'attente.

10. Appareil d'ordonnancement conjoint selon la revendication 8, dans lequel le moyen de mappage comprend un moyen de demande de sous-canaux $N_{request}$ offrant un bon tat de canal pour des files d'attente d'utilisateurs, et un moyen pour attribuer chacun des sous-canaux $N_{request}$ une file d'attente d'utilisateurs parmi les files d'attente d'utilisateurs selon ladite quation, et pour accepter un sous-canal qui minimise ladite quation pour une file d'attente d'utilisateurs, si au moins deux sous-canaux sont attribus pour la file d'attente d'utilisateurs ; et la rptition des tapes de demande, d'attribution et d'acceptation jusqu' ce que tous les sous-canaux soient attribus.

11. Appareil d'ordonnancement conjoint selon l'une des revendications 7 10, dans lequel le moyen d'limination et d'ajout de liaisons comprend un moyen pour : (i) le comptage du nombre d'itrations de commande de puissance chaque fois qu'il n'existe pas de solution optimale ; (ii) la mise en oeuvre d'une commande de puissance conjointe aprs rduction d'un rapport cible signal interfrence plus bruit SINR, si le nombre d'itrations de commande de puissance est suprieur une valeur prdtermine ; et (iii) la mise jour du groupe de liaisons en liminant une liaison du groupe de liaisons et en slectionnant une autre liaison, et la mise en oeuvre d'une commande de puissance conjointe sur le groupe de liaisons mis jour.

**12.** Appareil d'ordonnancement conjoint selon la revendication 11, dans lequel le moyen de mise jour du groupe de liaisons la sous-tape (iii) comprend la slection d'une autre liaison selon l'expression :

$$k_m^\bullet = arg \min_{k \in s(m)} \sum_{i \neq m} \left( \frac{h_{k,i,n}}{h_{k,m,n}} \right)$$

qui implique qu'une liaison dans le meilleur tat de canal d'un ne sous-canal est slectionne dans la zone de service d'une m$^e$ station relais RS, et l'limination d'une liaison selon :

$$k^\bullet = arg \max_{k \in s(m)} \left( \sum_{i \neq m} \left( \frac{h_{k,i,n}}{h_{k,m,n}} \right) + \sum_{j \neq m} \left( \frac{h_{k,j,n}}{h_{s(j),j,n}} \right) \right)$$

o $h_{s(j),j,n}$ dsigne l'tat d'un ne sous-canal entre une j$^e$ RS et une MS s (j) dans la zone de service de la j$^e$ RS.

C/I

SUB-CHANNEL

OPTICAL FIBER

BS

OPTICAL FIBER

RS 1

C/I

SUB-CHANNEL

MS K

INTERFERENCE

RS 2

C/I

SUB-CHANNEL

- - - → SUBCHANNEL A
———→ SUBCHANNEL B
———→ SUBCHANNEL C

FIG.1

FIG.2

$H_1{}''$

$H_2{}''$

$H_3{}''$

$H_4{}''$

USER QUEUE STATUS  BS FRAME

- - - ► REQUEST
——► GRANT
——► ACCEPT

FIG.3

$H_1{}''$

$H_2{}''$

$H_3{}''$

$H_4{}''$

USER QUEUE STATUS  BS FRAME

- - - ► REQUEST
——► GRANT
——► ACCEPT

FIG.4

USER QUEUE STATUS          BS FRAME

$-- \rightarrow$ REQUEST
$\longrightarrow$ GRANT
$\longrightarrow$ ACCEPT

FIG.5

START

SET $r^{target\ sinr}$ AND TARGET SINR TO INITIAL VALUES — 602

ELECT PACKETS FROM USER QUEUES ($H_1^l$, $H_2^l$, ···, $H_N^l$) — 604

$k_m = \arg\ \max_{k \in s(m)}\ PM_{k,m}$, $m = 1, \cdots M$ — 606

UPDATE LINK GROUP $H_1''$, $H_2''$, ···, $H_N''$ — 608

JOINT POWER CONTROL FOR EACH SUBCHANNEL — 610

SET $r^{target\ sinr}$ AND TARGET SINR TO INITIAL VALUES — 618

OPTIMAL SOLUTION DETECTED FOR EACH SUBCHANNEL? — 612

NO

INCREASE ITERATION NUMBER $N_{iteration} \leftarrow N_{iteration} + 1$ — 620

YES

CHANNEL ALLOCATION — 614

UPDATE QUEUE STATUS AND IS THERE AVAILABLE CHANNEL AND PACKET TO BE TRANSMITTED? — 616

YES

NO

END

LINK ELIMINATION AND SELECTION — 626

UPDATE TARGET SINR $r^{target\ sinr} \leftarrow r^{target\ sinr}\_\Delta r$ — 624

YES

$N_{iteration} > N_{iteration\ max}$ ? — 622

NO

FIG.6

22

FIG.7

**EP 1 962 439 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006034578 A1
- US 20050048914 A1
- US 20060046643 A1
- US 20050141593 A1
- US 20040095907 A1
- EP 1650883 A2
- US 20060073790 A1
- EP 1729533 A1
- US 20020077151 A1

### Non-patent literature cited in the description

- **E. K. TAMEH et al.** The Use of Intelligently Deployed Fixed Relays to Improve the Performance of a UTRA-TDD System. *Vehicular Technology Conference 2003, USA,* 06 October 2003, ISBN 978-0-7803-7954-1, 1890-1894